# EUROPEAN PATENT SPECIFICATION

(11) **EP 1 172 812 B1**
(45) Date of publication and mention of the grant of the patent: **05.01.2005**
(21) Application number: 01202652.2
(22) Date of filing: 10.07.2001
(51) Int. Cl.: G11B 7/26, C09J 5/06

(54) **Method and device for producing a DVD**
Verfahren und Vorrichtung zum Herstellen einer DVD
Procédé et dispositif pour produire un DVD

(30) Priority: 14.07.2000 NL 1015719; 02.02.2001 NL 1017267
(43) Date of publication of application: 16.01.2002
(73) Proprietor: O.T.B. Group B.V., 5605 JC Eindhoven (NL)
(72) Inventor: Habraken, Antonius Martinus Lambertus, 5492 JK Sint Oedenrode (NL); Evers, Marc, 5665 GT Geldrop (NL); Reuser, Bob, 5627 KT Eindhoven (NL)
(74) Representative: van Westenbrugge, Andries

(56) References cited:
- PATENT ABSTRACTS OF JAPAN vol. 1998, no. 03, 27 February 1998 (1998-02-27) -& JP 09 306041 A (NIPPON COLUMBIA CO LTD), 28 November 1997 (1997-11-28)
- PATENT ABSTRACTS OF JAPAN vol. 1997, no. 10, 31 October 1997 (1997-10-31) -& JP 09 161333 A (SONY DISC TECHNOL:KK), 20 June 1997 (1997-06-20)
- PATENT ABSTRACTS OF JAPAN vol. 011, no. 342 (P-635), 10 November 1987 (1987-11-10) -& JP 62 124629 A (MATSUSHITA ELECTRIC IND CO LTD), 5 June 1987 (1987-06-05)
- PATENT ABSTRACTS OF JAPAN vol. 1997, no. 07, 31 July 1997 (1997-07-31) -& JP 09 073672 A (SONY DISC TECHNOL:KK), 18 March 1997 (1997-03-18)
- PATENT ABSTRACTS OF JAPAN vol. 013, no. 427 (C-639), 22 September 1989 (1989-09-22) -& JP 01 163201 A (MATSUSHITA ELECTRIC IND CO LTD), 27 June 1989 (1989-06-27)
- PATENT ABSTRACTS OF JAPAN vol. 012, no. 408 (P-778), 28 October 1988 (1988-10-28) -& JP 63 146265 A (TOKYO ELECTRON LTD), 18 June 1988 (1988-06-18)
- PATENT ABSTRACTS OF JAPAN vol. 1997, no. 10, 31 October 1997 (1997-10-31) -& JP 09 147430 A (MITSUBISHI PLASTICS IND LTD), 6 June 1997 (1997-06-06)

## Description

The invention relates to the field of producing a disc from two disc halves. Discs of this type are generally optical data carriers with a high storage capacity, such as DVDs. In this case, both disc halves bear a series of helical minuscule pits or bumps which can be read by means of a laser beam.

The disc halves are attached to one another by gluing. The glue is arranged in the area between the two disc halves in the vicinity of their central hole and is then spread by centrifugal forces over the entire surface area between the disc halves.

In this way, it is possible to ensure a reliable and complete join between the disc halves. Moreover, the centrifugal force ensures that the relatively thick bead of glue which was initially applied in the vicinity of the central hole is spread out very uniformly.

The bead of glue spreads out along a front which expands in the radial direction towards the edges of the disc halves. In the process, the problem may arise that, on account of the speed and force at which the front is being thrown outwards, the glue which is located directly behind this front is carried along with it. As a result, the thickness of the layer of glue becomes too small to ensure good adhesion.

It is an object of the invention to provide a method for producing discs as described above which does not have this drawback. This object is achieved by means of a method for gluing together two disc halves to produce a disc, for example an optical data carrier, such as a DVD, comprising the steps of:
- providing two disc halves which are each provided with a central hole;
- placing one disc half on a rotary member, provided with a mandrel in such a manner that the mandrel fits through the central hole in the said disc half;
- applying a quantity of glue to the disc half in a central region thereof;
- placing the second disc half concentrically onto the first disc half over the mandrel, so as to enclose the glue;
- rotating the rotary member with the two disc halves in such a manner that, under the influence of the centrifugal force which is generated, the glue spreads along an expanding front between the two disc halves;
- stabilizing the glue which is immediately behind the glue front by means of light radiation;
- curing the glue;
- removing the glued-together disc halves from the rotary member and the mandrel.

Further embodiments are disclosed in the dependent claims.

Since, in the method according to the invention, the glue which is located immediately behind the glue front is stabilized and brought into a gel-like state, it is no longer possible for it to be sucked along with the glue front. Consequently, the desired thickness of the layer of glue is maintained over the entire surface of the disc halves. Usually, both disc halves have a central hole through which a mandrel provided on the rotary member can extend. The space between the two disc halves at the location of the central hole can be sealed by expanding the mandrel. Consequently, the glue cannot leak out into the hole, not even if the disc halves are pressed onto one another slightly. Consequently, the mandrel cannot become soiled.

It is preferable to use a mandrel with a relatively hard core and a flexible sleeve which surrounds the core, which sleeve can be expanded by means of compressed air.

In this case, the procedure can be as follows:
- the first disc half is put in place;
- the mandrel is then expanded;
- glue is then applied to the first disc half;
- the second disc half is then placed over the expanded mandrel, taking with it any glue adhering to the mandrel.

The glue is, as it were, scraped off the flexible sleeve by the second disc half, so that the sleeve does not become soiled even after large numbers of discs have been produced.

The invention also relates to a device for gluing together two disc halves which are each provided with a central hole, to produce a disc, for example an optical data carrier such as a DVD. A device of this kind is disclosed in JP-A-0 930 6041. According to the invention, this device has a radiation source which emits a light beam which can be displaced in the radial direction with respect to the mandrel.

The expandable mandrel can be designed in various ways. The mandrel preferably comprises a central core and a flexible sleeve which is connected in an airtight manner to the core, which core has an air-supply duct which opens out into the interior of the flexible sleeve.

The invention will now be explained in more detail with reference to an exemplary embodiment illustrated in the figures.
Figs. 1-7 show the steps of the method according to the invention.
Fig. 8 shows a cross section through the device according to the invention.

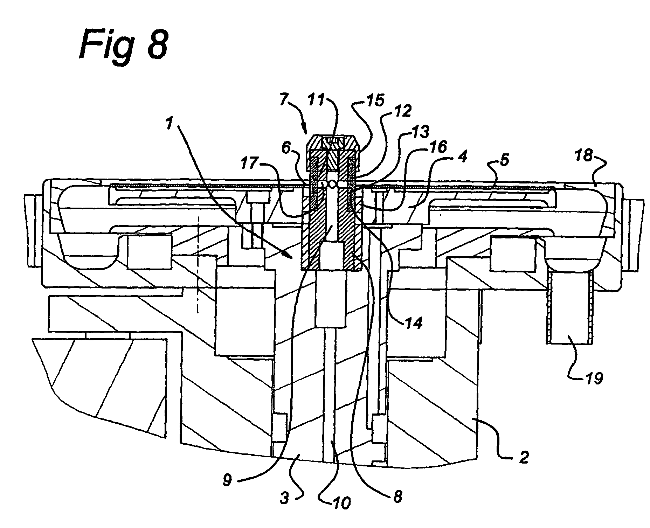

The device for carrying out the method which is shown in Fig. 8 comprises a rotary member which is denoted overall by 1 and is mounted rotatably in a housing 2. The rotary member 1 comprises a spindle 3 which can rotate in the said housing 2 and a carrier 4 on which a first disc half 5 is arranged. This disc half 5 has a central hole 6 through which the mandrel, which is denoted overall by 7, fits. This mandrel 7 is attached to the spindle 3 and comprises a relatively hard core 8 with a bore 9 which is connected to the feed bore 10 in the spindle 3.

The core 8 has a constricted section 11 in which a flexible sleeve 12, for example made from rubber, is accommodated in a tight-fitting manner. This flexible sleeve 12 has recesses 13 which engage in ridges 14 of the core 8.

At the top, the flexible sleeve 12 is mounted within an attachment ring 15 and at the underside is mounted within an attachment ring 16.

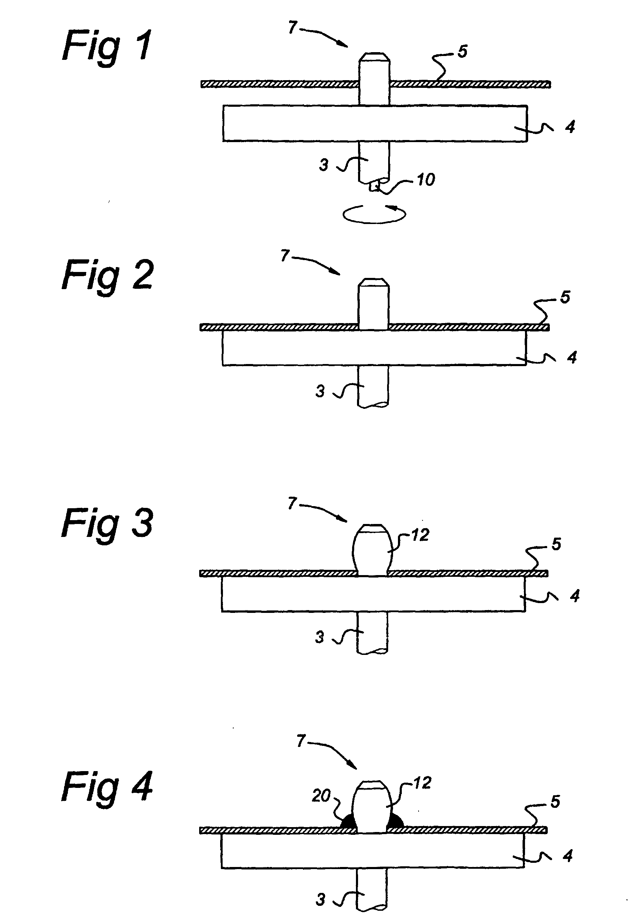

Four radial ducts 17 run from the duct 9 in the core 8 towards the inner surface of the flexible sleeve 12. If compressed air is fed into the spindle 3 via the feed duct 10, the flexible member 12 expands as a result, in such a manner that it comes to bear firmly against the inner wall of the hole 6, which will be explained in more detail with reference to Figs. 1-8.

At the outer circumference of the carrier 4 there is a collection rim 18 which is fixed to the housing 2. This collection rim collects any glue which is flung outwards during rotation of the disc halves 5 and discharges it via the outlet 19.

In the method according to the invention, the procedure is as shown diagrammatically in Figs. 1-7, which in each case show the spindle 3, the carrier 4 and the mandrel 7. The other parts of the device according to the invention have been omitted for the sake of clarity.

As shown in Fig. 1, first of all a first disc half 5 is placed over the mandrel 7 onto carrier 4. The mandrel 7 has not yet been expanded.

In doing so, the state shown in Fig. 2 is reached, in which the first disc half 5 rests on the carrier 4. As shown in Fig. 3, the sleeve 12 is expanded so that it comes to bear firmly against the inner wall of the hole 6 in the first disc half 5. Then, as shown in Fig. 4, a bead of glue 20 is applied around the expanded sleeve 12, in the region of the first disc half 5 which adjoins the central hole in this disc half.

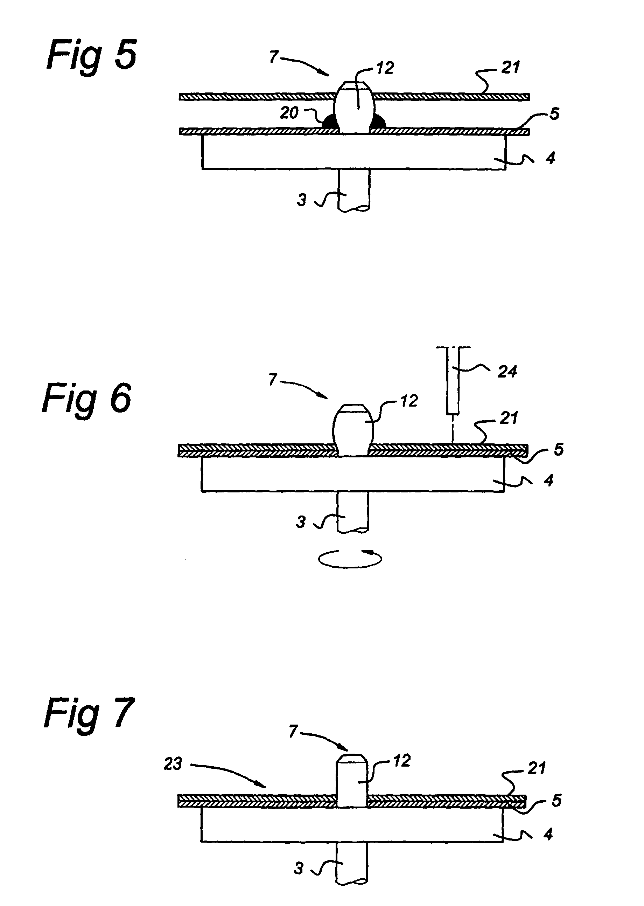

Then, as shown in Fig. 5, the second disc half 21 is placed onto the expanded sleeve 12, during which process the glue 20 adhering to the expanded sleeve 12 is scraped down towards the first disc half 5.

The disc halves 5, 21 which have been arranged on top of one another are rotated, in such a manner that the glue is spread, as a result of the centrifugal force which is thereby generated, over the whole of the mutually facing surfaces of the disc halves 5, 21. Under the influence of the centrifugal forces which are produced by rotation of the disc halves 5, 21, the layer of glue spreads outwards as an expanding front. This may cause the problem of the layer of glue immediately behind the said front becoming too thin on account of the glue being sucked along by the front.

In order to maintain the desired thickness of the layer of glue, according to the invention the glue immediately behind the front is stabilized by means of a source 24 which emits a beam of ultraviolet light. As a result, a gel-like character is imparted to the glue, thus preventing it from being sucked along by the front.

Finally, as shown in Fig. 7, the sleeve is depressurized, so that it returns to its original form, and the disc 23 which has been produced, comprising the disc halves 5, 21 which have now been glued together, can be removed from the carrier 4.

## Claims

1. Method for gluing together two disc halves (5, 21) to produce a disc (23), for example an optical data carrier, such as a DVD, comprising the steps of:
- providing two disc halves (5, 21) which are each provided with a central hole (6);
- placing one disc half (5) on a rotary member (3, 4), provided with a mandrel (7) in such a manner that the mandrel (7) fits through the central hole (6) in the said disc half (5);
- applying a quantity of glue (20) to the disc half (5) in a central region thereof;
- placing the second disc half (21) concentrically onto the first disc half (5) over the mandrel (7), so as to enclose the glue (20);
- rotating the rotary member (3, 4) with the two disc halves (5, 21) in such a manner that, under the influence of the centrifugal force which is generated, the glue (20) spreads along an expanding front between the two disc halves (5,21);
- stabilizing the glue which is immediately behind the glue front by means of light radiation;
- curing the glue (20);
- removing the glued-together disc halves (5, 21) from the rotary member (3, 4) and the mandrel (7).

2. Method according to Claim 1, comprising the step of stabilizing the glue behind the glue front by means of UV light radiation.

3. Method according to Claim 1 or 2, for gluing together two disc halves (5, 21) which are each provided with a central hole (6), comprising the steps of:
- placing one disc half (5) on a rotary member (3, 4) provided with a mandrel (7) in such a manner that the mandrel (7) fits through the central hole (6) in the said disc half (5);
- expanding the mandrel (7) in such a manner that it comes to bear flush against the wall of the central hole (6) of the disc half (5) which was put in place first;
- then applying the quantity of glue (20) to the said disc half (5);
- placing the second disc half (21) concentrically onto the first disc half (5) over the mandrel (7), so as to enclose the glue (20);
- rotating the rotary member (3, 4) with the two disc halves (5, 21) in such a manner that, under the influence of the centrifugal force which is generated, the glue (20) spreads along an expanding front between the two disc halves (5, 21);
- stabilizing the glue which is immediately behind the glue front by means of light radiation;
- curing the glue (20);
- removing the glued-together disc halves (5, 21) from the rotary member (3, 4) and the mandrel (7).

4. Method according to Claim 1, 2 or 3, comprising the step of providing a mandrel (7) which has a relatively hard core (8) and a flexible sleeve (12) which surrounds the core (8), and expanding the sleeve (12) by means of compressed air.

5. Method according to claim 3 or 4, comprising the steps of:
- putting the first disc half (5) in place;
- then expanding the mandrel (7);
- then applying glue (20) to the first disc half (5);
- then placing the second disc half (21) over the expanded mandrel (7), taking with it any glue (20) adhering thereto.

6. Device for gluing together two disc halves (5, 21) to produce a disc (23), for example an optical data carrier such as a DVD, using the method according to one of Claims 1-5, comprising a rotatable carrier (3, 4) on which the disc halves (5, 21) can be accommodated, and a light radiation source (24) is provided which emits a light beam for curing the glue, **characterized in that** the light beam can be displaced in the radial direction with respect to the mandrel (7) in such a way as to stabilize the glue which is immediately behind the glue front.

7. Device according to Claim 6 for gluing together two disc halves (5, 21) which are each provided with a central hole (6), in which the carrier (3, 4) is provided with a mandrel (7) which can be fitted through the central holes (5) in the disc halves, the mandrel (7) being expandable in the radial direction.

8. Device according to Claim 6 or 7, in which the mandrel (7) comprises a central core (8) and a flexible sleeve (12) which is connected to the core (8) in an airtight manner, which core (8) has an air-supply duct (9, 10) which opens out into the interior of the flexible sleeve (12).

9. Device according to Claim 6, in which the mandrel (7) comprises a cylindrical core (8) provided with a central air-supply duct (9) to which at least one radial transverse duct (17), which opens out on the outer surface of the core (8), is connected.

10. Device according to Claim 8, in which the core (8) comprises a constricted region (11) in which the sleeve (12) is accommodated.

11. Device according to Claim 10, in which the sleeve (12) is clamped in at both ends between a clamping ring (15, 16).

12. Device according to one of Claims 8, 10, 11, in which the sleeve (12) has at least one internal recess (13), and the mandrel (7) as at least one corresponding ridge (14) which engages in the recess (13).

## Patentansprüche

1. Verfahren zum Verkleben von zwei Plattenhälften (5, 21) zum Herstellen einer Platte (23), zum Beispiel eines optischen Datenträgers. wie einer DVD, mit den Schritten:
- Bereitstellen von zwei Plattenhälften (5, 21), von denen jede mit einem zentralen Loch (6) versehen ist,
- Plazieren einer Plattenhälfte (5) auf einem Drehtell (3. 4), das mit einem Dorn (7) in der Weise versehen ist, dass der Dorn (7) durch das zentrale Loch (6) in der Plattenhälfte (5) passt.
- Auftragen einer Menge von Klebstoff (20) auf die Plattenhälfte (5) in einem zentralen Bereich davon.
- Plazieren der zweiten Plattenhälfte (21) konzentrisch auf der ersten Plattenhälfte (5) über den Dorn (7). um den Klebstoff (20) einzuschließen,
- Drehen des Drehteils (34) mit den beiden Plattenhälften in solcher Weise, dass unter dem Einfluss der Zentrifugalkraft, die erzeugt wird. der Klebstoff (20) sich entlang einer sich ausdehnenden Front zwischen den beiden Plattenhälften (5,21) ausbreitet,
- Stabilisieren des Klebstoffs, der unmittelbar hinter der Klebstofffront ist, mittels Lichtstrahlung.
- Auswerten des Klebstoffs (20),
- Entfernen der verklebten Plattenhälften (5, 21) von dem Drehteil (34) und dem Dorn (7).

2. Verfahren nach Anspruch 1, mit dem Schritt des Stabilisieren des Klebstoffs hinter der Klebstofffront mittels UV-Lichtstrahlung.

3. Verfahren nach Anspruch 1 oder 2 zum Verkleben von zwei Plattenhälften (5, 21), die jede mit einem zentralen Loch (6) versehen sind, mit den Schritten:
- Plazieren einer Plattenhälfte (5) auf einem Drehteil (3. 4). das mit einem Dorn (7) in solcher Weise versehen ist, dass der Dorn (7) durch das zentrale Loch (6) in der Plattenhälfte (5) passt:
- Ausdehnen des Dorns (7) in solcher Weise, dass er glatt gegen die Wand des zentralen Lochs (6) der Plattenhälfte (5) drückt. die zuerst in Stellung gebracht wurde.
- dann Auftragen der Menge von Klebstoff (20) auf die Plattenhälfte (5).
- Plazieren der zweiten Plattenhälfte (21) konzentrisch auf der ersten Plattenhälfte (5) über den Dorn (7), um den Klebstoff (20) einzuschließen,
- Drehen des Drehteils (34) mit den beiden Plattenhälften (5; 21) in solcher Weise, dass sich unter dem Einfluss der erzeugten Zentrifugalkraft der Klebstoff (20) entlang einer sich ausdehnenden Front zwischen den beiden Plattenhälften (5, 21) ausbreitet.
- Stabilisieren des Klebstoffs, der unmittelbar binter der Klebstofffront ist, mittels Lichtstrahlung,
- Härten des Klebstoffs (20),
- Entfernen der verklebten Plattenhälften (5, 21) von dem Drehteil (3, 4) und dem Dorn (7).

4. Verfahren nach Anspruch 1, 2 oder 3 mit dem Schritt des Vorsehens eines Dorns (7), der einen relativ harten Kern (8) und eine flexible Hülse (12) aufweist. die den Kern (8) umgibt, und des Ausdehnens der Hülse (12) mittels Druckluft.

5. Verfahren nach Anspruch 3 oder 4, mit den Schritten:
- in Stellung bringen der ersten Plattenhälfte (5),
- dann Ausdehnen des Dorns (7),
- dann Auftragen von Klebestoff (20) auf die erste Plattenhälfte (5),
- dann Plazieren der zweiten Plattenhälfte (21) über den ausgedehnten Dorn (7), wobei sie jeden daran haftenden Klebstoff (20) mitnimmt.

6. Vorrichtung zum Verkleben zweier Plattenhälften (5. 21) zum Herstellen einer Platte (23), zum Beispiel eines optischen Datenträgers wie einer DVD, unter Benutzung des Verfahrens nach einem der Ansprüche 1 bis 5 mit einem drehbaren Träger (3, 4), auf welchem die Plattenhälften (5, 21) aufgenommen werden können, und eine Lichtetrahlungsquelle (24) ist vorgesehen, die einen Lichtstrahl zum Härten des Klebstoffs emittiert, **dadurch gekennzeichnet, dass** der Lichtstrahl in Radialrichtung bezüglich des Dorns (7) in solcher Weise versetzt werden kann, um den Klebstoff zu stabilisieren, der unmittelbar hinter der Klebstofffront ist.

7. Vorrichtung nach Anspruch 6, zum Verkleben zweier Plattenhälften (5, 21 ), von denen jede mit einem zentralen Loch (6) versehen ist, bei der der Träger (3. 4) mit einem Dorn (7) versehen ist, der durch die zentralen Löcher (5) in den Plattenhälften gepasst werden kann, der Dorn (7) ist in Radialrichtung ausdehnbar.

8. Vorrichtung nach Anspruch 6 oder 7, bei der der Dorn (7) einen zentralen Kern (8) und eine flexible Hülse (12) umfasst, die mit dem Kern (8) in luftdichter Weise verbunden ist, der Kern (8) weist einen Luftzuführkanal (9, 10) auf, der sich nach außen in das Innere der flexiblen Hülse (12) öffnet.

9. Vorrichtung nach Anspruch 6, bei der der Dorn (7) einen zylindrischen Kern (8) umfasst, der mit einem zentralen Luftzuführkanal (9) versehen ist, mit dem zumindest ein radialer Querkanal (17) verbunden ist, der sich nach außen an der äußeren Oberfläche des Kerns (8) öffnet.

10. Vorrichtung nach Anspruch 8, bei der der Kern (8) einen eingeschnürten Bereich (11) umfasst. in dem die Hülse (12) aufgenommen ist.

11. Vorrichtung nach Anspruch 10, bei der die Hülse (12) an beiden Enden zwischen einen Klemmring (15, 16) eingeklemmt ist.

12. Vorrichtung nach einem der Ansprüche 8, 10 oder 11, bei der die Hülse (12) zumindest eine innere Ausnehmung aufweist, und der Dorn (7) zumindest eine korrespondierende Rippe (14) aufwehst, die in die Ausnehmung (13) eingreift.

## Revendications

1. Procédé pour coller ensemble deux moitiés de disque (5, 21) afin de produire un disque (23), par exemple un support de données optique, tel qu'un DVD, comprenant les étapes consistant à :
- fournir deux moitiés de disque (5, 21) qui sont pourvues chacune d'un trou central (6);
- placer une moitié de disque (5) sur un élément rotatif (3, 4), pourvu d'un mandrin (7) d'une manière telle que le mandrin (7) s'ajuste à travers le trou central (6) dans ladite moitié de disque (5) ;
- appliquer une quantité de colle (20) sur la moitié de disque (5) dans une zone centrale de celle-ci ;
- placer la deuxième moitié de disque (21) de manière concentrique sur la première moitié de disque (5) par dessus le mandrin (7), de façon à enfermer la colle (20) ;
- faire tourner l'élément rotatif (3, 4) avec les deux moitiés de disque (5, 21) d'une manière telle que, sous l'influence de la force centrifuge qui est générée, la colle (20) s'étale le long d'un front d'expansion entre les deux moitiés de disque (5,21) ;
- stabiliser la colle qui est immédiatement derrière le front de colle au moyen d'un rayonnement lumineux ;
- faire durcir la colle (20) ;
- enlever les moitiés de disque collées ensemble (5, 21) de l'élément rotatif (3, 4) et du mandrin (7).

2. Procédé selon la revendication 1, comportant l'étape de stabilisation de la colle derrière le front de colle au moyen d'un rayonnement lumineux UV.

3. Procédé selon la revendication 1 ou 2, pour coller ensemble deux moitiés de disque (5, 21) qui sont pourvues chacune d'un trou central (6), comprenant les étapes consistant à :
- placer une moitié de disque (5) sur un élément rotatif (3, 4) pourvu d'un mandrin (7) d'une manière telle que le mandrin (7) s'ajuste à travers le trou central (6) dans ladite moitié de disque (5) ;
- dilater le mandrin (7) d'une manière telle qu'il vient porter en affleurement contre la paroi du trou central (6) de la moitié de disque (5) qui a été mise en place en premier ;
- appliquer alors la quantité de colle (20) sur ladite moitié de disque (5) ;
- placer la deuxième moitié de disque (21) de manière concentrique sur la première moitié de disque (5) par dessus le mandrin (7), de façon à enfermer la colle (20) ;
- faire tourner l'élément rotatif (3, 4) avec les deux moitiés de disque (5, 21) d'une manière telle que, sous l'influence de la force centrifuge qui est générée, la colle (20) s'étale le long d'un front d'expansion entre les deux moitiés de disque (5, 21) ;
- stabiliser la colle qui est immédiatement derrière le front de colle au moyen d'un rayonnement lumineux ;
- faire durcir la colle (20) ;
- enlever les moitiés de disque collées ensemble (5, 21) de l'élément rotatif (3, 4) et du mandrin (7).

4. Procédé selon la revendication 1, 2 ou 3, comprenant l'étape consistant à fournir un mandrin (7) qui a un noyau relativement dur (8) et un manchon flexible (12) qui entoure le noyau (8), et à dilater le manchon (12) au moyen d'air comprimé.

5. Procédé selon la revendication 3 ou 4, comportant les étapes consistant à :
- mettre la première moitié de disque (5) en place ;
- dilater alors le mandrin (7) ;
- appliquer ensuite la colle (20) sur la première moitié de disque (5) ;
- placer alors la deuxième moitié de disque (21) par dessus le mandrin dilaté (7), en prenant avec toute colle (20) qui y adhère.

6. Dispositif pour coller ensemble deux moitiés de disque (5, 21) afin de produire un disque (23), par exemple un support de données optique tel qu'un DVD, en utilisant le procédé selon l'une des revendications 1 à 5, comprenant un support rotatif (3, 4) sur lequel les moitiés de disque (5, 21) peuvent être placées, et une source de rayonnement lumineux (24) qui est fournie et émet un faisceau de lumière destiné à faire durcir la colle, **caractérisé en ce que** le faisceau de lumière peut être déplacé dans la direction radiale par rapport au mandrin (7), de manière à stabiliser la colle qui est immédiatement derrière le front de colle.

7. Dispositif selon la revendication 6 pour coller ensemble deux moitiés de disque (5, 21) qui sont pourvues chacune d'un trou central (6), dans lequel le support (3, 4) est pourvu d'un mandrin (7) qui peut être monté à travers les trous centraux (5) dans les moitiés de disque, le mandrin (7) pouvant être dilaté dans la direction radiale.

8. Dispositif selon la revendication 6 ou 7, dans lequel le mandrin (7) comprend un noyau central (8) et un manchon flexible (12) qui est relié au noyau (8) d'une manière étanche à l'air, lequel noyau (8) ayant un conduit d'alimentation en air (9,10) qui s'ouvre à l'intérieur du manchon flexible (12).

9. Dispositif selon la revendication 6, dans lequel le mandrin (7) comprend un noyau cylindrique (8) pourvu d'un conduit d'alimentation en air central (9) auquel au moins un conduit transversal radial (17), qui s'ouvre sur la surface extérieure du noyau (8), est relié.

10. Dispositif selon la revendication 8, dans lequel le noyau (8) comprend une zone rétrécie (11) dans laquelle est logé le manchon (12).

11. Dispositif selon la revendication 10, dans lequel le manchon (12) est serré aux deux extrémités entre une bague de serrage (15,16).

12. Dispositif selon l'une des revendications 8 à 11, dans lequel le manchon (12) a au moins un renfoncement interne (13), et le mandrin (7) a au moins une arête correspondante (14) qui s'engage dans le renfoncement (13).
